# EUROPÄISCHE PATENTSCHRIFT

(11) **EP 2 941 375 B1**
(45) Veröffentlichungstag und Bekanntmachung des Hinweises auf die Patenterteilung: **09.05.2018**
(21) Anmeldenummer: 14703273.4
(22) Anmeldetag: 03.01.2014
(51) Int. Cl.: B61L 15/00, H01H 9/16, H01H 43/00

(54) **VERFAHREN UND VORRICHTUNG ZUM PERSONENSCHUTZ IM NAHBEREICH EINER EIN HF-FELD ABSTRAHLENDEN EINRICHTUNG**
METHOD AND DEVICE FOR PROTECTING PERSONS IN THE VICINITY OF AN HF FIELD-EMITTING DEVICE
PROCÉDÉ ET DISPOSITIF DE PROTECTION DE PERSONNES PRÉSENTES DANS LA ZONE PROCHE D'UN SYSTÈME RAYONNANT UN CHAMP À HAUTE FRÉQUENCE

(30) Priorität: 15.02.2013 DE 102013202468
(43) Veröffentlichungstag der Anmeldung: 11.11.2015
(73) Patentinhaber: Siemens Aktiengesellschaft, 80333 München (DE)
(72) Erfinder: IBENDORF, Hendrik, 14532 Kleinmachnow (DE); RICHTER, Olaf, 13591 Berlin (DE); BRABAND, Jens, 38106 Braunschweig (DE)
(86) Internationale Anmeldenummer: PCT/EP2014/050044
(87) Internationale Veröffentlichungsnummer: WO 2014/124759

(56) Entgegenhaltungen:
- JP-A- 2009 122 118
- US-A- 1 893 900
- US-A1- 2013 106 600

## Beschreibung

Die Erfindung betrifft ein Verfahren zum Personenschutz im Nahbereich einer ein HF-Feld abstrahlenden ETCS-Antenne eines Schienenfahrzeuges sowie eine diesbezügliche Vorrichtung.

Der Schutz von Personen bei Annäherung an die ein HF-Feld abstrahlende Einrichtung ist wegen der gesundheitsschädlichen HF-Strahlung erforderlich. Derartige Einrichtungen sind in vielen Bereichen, beispielsweise bei Industrieanlagen, Kommunikationssystemen und Verkehrssystemen im Einsatz. Insbesondere für Wartungs-, Diagnose- oder Montagezwecke ist ein direkter Personenkontakt mit diesen Einrichtungen unumgänglich. Die nachfolgende Beschreibung bezieht sich im Wesentlichen auf ein HF-Feld abstrahlende ETCS-Antennen eines Schienenfahrzeuges gemäß Anspruch 2.

ETCS-Antennen an Schienenfahrzeugen dienen zur absoluten Ortung sowie zur Datenübertragung zwischen Strecke und Schienenfahrzeug. Deren Sendeleistung mit bis zu 10 Watt und der verwendete Frequenzbereich bei 27 MHz sind in unmittelbarer Nähe einer aktiven, das heißt eingeschalteten ETCS-Antenne für Personen gesundheitsschädlich. Bei ebenerdigen Gleisen ist eine Gefährdung von Personen nicht möglich, da die ETCS-Antenne im Unterflurbereich des Schienenfahrzeuges angeordnet ist und somit ein unmittelbarer Kontakt zwischen einer Person und der ETCS-Antenne normalerweise nicht möglich ist. Bei Wartungsarbeiten hingegen wird das Schienenfahrzeug auf hochgeständerten Gleisen, beispielsweise in einem Depot oder einer Betriebswerkstatt, abgestellt. Dabei muss gewährleistet sein, dass die ETCS-Antenne zum Personenschutz abgeschaltet oder ein ausreichend großer Sicherheitsabsstand eingehalten wird.

Eine einfache Kontrollleuchte an der ETCS-Antenne, um deren Ein- oder Aus-Zustand anzuzeigen, ist nicht zulässig, da ein möglicher Ausfall der Kontrollleuchte, der nicht offenbart werden kann, eine fälschliche Sicherheit signalisieren würde.

Eine Schalteinrichtung zur zeitlich begrenzten Abschaltung einer Last ist in der JP 2009 122 118 A beschrieben.

Derzeit wird die Sicherheit bei Arbeiten an der ETCS-Antenne nur über betriebliche Regelungen und Arbeitsanweisungen abgedeckt. Unterwiesenes Personal muss sich vor den Wartungsarbeiten im Fahrzeuginneren vergewissern, dass die ETCS-Antennen abgeschaltet sind. Für nicht ausreichend eingewiesenes Personal ist die Gefahr durch HF-Strahlung nicht erkennbar.

Üblicherweise sind im Depotbereich bei hochgeständerten Gleisen Warnschilder angebracht, die allgemein auf Gefahren von hochfrequenten elektromagnetischen Feldern, die von der ETCS-Antenne ausgehen, hinweisen. Diese Maßnahmen sind, insbesondere bei fehlender Sachkenntnis des Wartungspersonals, nur unzureichend sicher, zumal das Vorhandensein eines HF-Feldes nicht offensichtlich ist und daher ein Nichtvorhandensein gefährlicher Strahlung suggerieren könnte.

Der Erfindung liegt die Aufgabe zugrunde, ein Verfahren und eine Vorrichtung gattungsgemäßer Art anzugeben, die den Aus-Zustand der ein HF-Feld erzeugenden Einrichtung sicherzustellen.

Verfahrensgemäß wird die Aufgabe dadurch gelöst, dass die ETCS-Antenne mittels Up-Link (ground tot rain) während eines begrenzten Zeitraumes in Aus-Zustand gehalten oder überführt wird, wobei der Ein-/Aus-Zustand optisch und/oder akustisch signalisiert wird.

Die Aufgabe wird auch durch eine Vorrichtung gelöst, bei der eine Personen-Schutz-Ausrüstung - PSA - vorgesehen ist, welche eine Ansteuereinrichtung zur Ausschaltung der Einrichtung, eine Schaltung zur zeitlichen Begrenzung der Ausschaltung und eine Signalisierungseinrichtung zur optischen und/oder akustischen Signalisierung des Ein-/Aus-Zustandes aufweist.

Auf diese Weise wird das Vorhandensein eines gesundheitsschädlichen HF-Feldes ausgeschlossen, so lange der Aus-Zustand von der PSA signalisiert wird. Vorteilhaft ist vor allem, dass die ETCS-Antenne nach Ende des begrenzten Zeitraumes der Ansteuerung wieder den normalen Betriebszustand einnimmt. Eine erneute Ansteuerung zur Verlängerung des strahlungsfreien Aus-Zustandes kann bedarfsabhängig von einer Betriebsleitstelle oder direkt an der PSA automatisch, zum Beispiel mittels Schienenschalter am Abstellgleis der Betriebswerkstatt, oder manuell erfolgen. Das Ausgangssignal der PSA erzeugt bei ausgeschalteter ETCS-Antenne einen Freigabeton und/oder ein Freigabelicht bezüglich des Antennennahbereiches. Die Lichtfunktion kann auch genutzt werden, um eine Anzeigetafel sichtbar zu machen, die darauf hinweist, dass der Unterflurbereich des Schienenfahrzeuges freigegeben ist, da die ETCS-Antennen ausgeschaltet sind. Beispielsweise kann eine Betriebsleitzentrale den Aus-Zustand der ETCS-Antennen für alle auf den üblicherweise dicht benachbarten Gleisen der Betriebswerkstatt abgestellten Schienenfahrzeuge ansteuern und überwachen und den Aus-Zustand auf einer zentralen Anzeigetafel in der Halle der Betriebswerkstatt visualisieren.

Akustische und/oder optische Signalisierung subsummiert im Sinne der Erfindung auch jegliche andere Signalisierungsmöglichkeit. Es muss nur gewährleistet sein, dass Personen bei Strahlungsgefahr hinreichend gewarnt werden und/oder bei ausgeschalteter Strahlungsquelle informiert werden.

Anstelle einer stationären Personen-Schutz-Ausrüstung - PSA -, die vorzugsweise für Depots oder Betriebswerkstätten geeignet ist, kann auch ein mobiler Einsatz einer PSA erforderlich sein. Dazu ist gemäß Anspruch 3 vorgesehen, dass die PSA von einer Person mitführbar ausgebildet ist, wobei Aktivierungsmittel zur manuellen Aktivierung der PSA vorgesehen sind. Die mitführbare PSA enthält auch die Signalisierungseinrichtung, welche bei ausgeschalteter ETCS-Antenne das Freigabesignal für Arbeiten im Nahbereich der ETCS-Antenne erzeugt.

Um ein rechtzeitiges Neustarten nach Ablauf des begrenzten Zeitraumes der Wirkung der PSA sicherzustellen, kann diese eine Restlaufzeitanzeige aufweisen. Vorzugsweise erfolgt der Neustart jedoch automatisch, solange keine aktive Beendigung des Schutzbedarfes, zum Beispiel durch Ausschaltung der PSA, ausgelöst wird. Die PSA-Ausschaltung bewirkt gleichzeitig gegebenenfalls eine Rückschaltung in den Ein-Zustand der ETCS-Antenne(n).

## Patentansprüche

1. Verfahren zum Personenschutz im Nahbereich einer ein HF-Feld abstrahlenden ETCS European Train Control System)-Antenne eines Schienenfahrzeuges,
**dadurch gekennzeichnet, dass**
die ETCS-Antenne mittels Up-Link während eines begrenzten Zeitraumes in Aus-Zustand gehalten oder überführt wird, wobei der Ein-/Aus-Zustand optisch und/oder akustisch signalisiert wird.

2. Vorrichtung zum Personenschutz im Nahbereich einer ETCS-Antenne eines Schienenfahrzeuges,
**dadurch gekennzeichnet, dass**
eine Personen-Schutz-Ausrüstung vorgesehen ist, welche eine Ansteuereinrichtung zur Ausschaltung der ETCS-Antenne mittels Up-Link, eine Schaltung zur zeitlichen Begrenzung der Ausschaltung und eine Signalisierungseinrichtung zur optischen und/oder akustischen Signalisierung des Ein-/Aus-Zustandes aufweist.

3. Vorrichtung nach Anspruch 2,
**dadurch gekennzeichnet, dass**
die Personen-Schutz-Ausrüstung von einer Person mitführbar ausgebildet ist, wobei Aktivierungsmittel zur manuellen Aktivierung der Personen-Schutz-Ausrüstung vorgesehen sind.

## Claims

1. Method for protecting persons in the vicinity of an ETCS (European Train Control System) antenna of a rail vehicle emitting an HF field,
**characterised in that** the ETCS antenna is held in the off state or switched into said state for a limited period of time by means of an uplink, wherein the on/off state is signalled optically and/or acoustically.

2. Apparatus for protecting persons in the vicinity of an ETCS antenna of a rail vehicle,
**characterised in that** a personal safety apparatus is provided, which has a control device for switching off the ETCS antenna, a circuit for limiting the period of time for which the device is switched off and a signalling device for optical and/or acoustic signalling of the on/off state.

3. Apparatus according to claim 2,
**characterised in that** the personal safety apparatus is embodied so that it can be carried by a person, wherein activation means for manual activation of the personal safety apparatus are provided.

## Revendications

1. Procédé de protection des personnes dans la zone proche d'une antenne ETCS (European Train Control System) rayonnant un champ à haute fréquence d'un véhicule ferroviaire,
**caractérisé en ce que** l'on maintient ou l'on fait passer, dans un état déconnecté l'antenne ETCS au moyen d'un up-link pendant un laps de temps limité, l'état connecté/déconnecté étant signalé visuellement et/ou acoustiquement.

2. Dispositif de protection des personnes dans la zone proche d'une antenne ETCS d'un véhicule ferroviaire,
**caractérisé en ce qu'**
il est prévu un équipement de protection des personnes, qui a un dispositif de commande pour déconnecter l'antenne ETCS au moyen d'un up-link, un circuit de limitation dans le temps de la déconnection et un dispositif de signalisation pour signaler visuellement et/ou acoustiquement l'état connecté/déconnecté.

3. Dispositif suivant la revendication 2,
**caractérisé en ce que** l'équipement de protection des personnes est constitué de manière à pouvoir être emporté par une personne, des moyens d'activation pour activer manuellement l'équipement de protection des personnes étant prévus.
